# EUROPEAN PATENT APPLICATION

(11) **EP 1 909 438 A1**
(43) Date of publication of application: **09.04.2008**
(21) Application number: 05774355.1
(22) Date of filing: 22.07.2005
(51) Int. Cl.: H04L 12/56, H04L 29/06, H04J 3/24

(54) **AN APPARATUS FOR A TRADITIONAL TERMINAL TO ACCESS AN IMS SYSTEM AND THE METHOD THEREOF**

(71) Applicant: ZTE Corporation, 518057 Shenzhen City, Guandong Province (CN)
(72) Inventor: HU, Xianli ZTE Plaza, Keji Road South, Shenzhen Guangdong (CN); WANG, Gang ZTE Plaza, Keji Road South, Shenzhen Guangdong 518057 (CN)
(74) Representative: Gray, John James
(86) International application number: PCT/CN2005/001105
(87) International publication number: WO 2007/009298

(57) **Abstract**

The present invention provides an apparatus for realizing the access of a legacy terminal to an IMS system and the method thereof. It comprises: a session control module, a downlink signaling interface function module, a downlink bearer interface function module, an uplink signaling interface function module, an uplink bearer interface function module and a media interworking module. The session control module registers the terminal that has entered service status to the I-CSCF on IMS side. During the session, the uplink signaling interface function module provides SIP signaling interaction with the CSCF function entity of IMS core network; the downlink signaling interface function module provides signaling interaction with the legacy terminal; the media interworking module provides the connection and media adaptation between the uplink bearer interface function module and the downlink bearer interface function module. The invention enables the services of the legacy networks such as PSTN/ISDN and the like to be integrated with those of IMS networks, thus reducing the cost of network construction and operation.

## Description

### Technical Field

The present invention refers to an access apparatus and the method thereof. More specifically, it relates to the gateway proxy apparatus for connecting legacy PSTN and ISDN terminal users to IMS system in the telecommunication area and the method thereof.

### Technology Background

IMS (IP Multimedia Subsystem) system architecture is proposed by 3GPP (the 3^{rd} Generation Partnership Project) organization. It is based on soft switching technology and is a subsystem that is super positioned on GPRS (General Packer Radio Service) network for supporting IP multimedia service. The main feature of IMS is that it employs SIP protocol (Session Initiation Protocol) as call control protocol and based on this, it realizes the irrelativeness between the service and the access network.

The most important function entity in IMS is CSCF (call session control function) that is responsible for processing user multimedia session. The functions include multimedia session control, address translation and the service transformation for business negotiation. Based on their individual functions, they can be divided into following three categories:
1. P-CSCF (Proxy-CSFS), which is the first touching point for the user terminals in IP multimedia subsystem;
2. S-CSCF (Servicing-CSCF), which is used for practically processing network session status;
3. I-CSCF (Interrogating-CSCF), which refers to all the signed users that are connected to this network operator, or to the touching points in operators' network of roaming users that are currently located in the service area of said network operator.

Among those, P-CSCF forwards the SIP registration request sent by UE (user equipment) to I-CSCF. Said I-CSCF is determined by the domain name provided by UE and forwards the SIP message sent by UE to S-CSCF, this S-CSCF is obtained by P-CSCF when UE launches the registration process;

I-CSCF designates an S-CSCF to execute SIP registration for the user. It obtains S-CSCF address from HSS ( Home Subscriber Server), forwards SIP request and routes the SIP request that is transmitted from other networks to S-CSCF;

As a registration machine, after receiving the registration request, S-CSCF makes the registration request effective through HSS and performs session control for the registered session terminal. After S-CSCF receives the request, it performs internal processing and forwarding, interrupting or launching SIP services, as well as interacting with service platform and providing multimedia service.

However, although IMS can realize the irrelativeness between the service and the access network, the access of legacy PSTN/ISDN terminal is not supported in the current architecture.

At present, for integrating legacy fixed terminal service, a PSTN/ISDN emulation subsystem is usually super positioned on the basis of current IMS subsystem architecture, two methods are usually employed: one is that the legacy terminal connects to the gateway, and visits I/S-CSCF (Interrogating/Servicing CSCF) through P-CSCF using gateway, and then the application layer provides PSTN/ISDN emulation service control; the other method is that AGCF (Access Gateway Control Function) is employed, wherein the legacy terminal connects to the gateway, controlled by AGCF, and visits I/S-CSCF through AGCF by gateway and then the application layer provides PSTN/ISDN emulation service control. Both the access methods need PSTN/ISDN emulation service equipment to provide PSTN/ISDN service for legacy terminals.

Nowadays, there exist lots of full-service operators in the world and numerous legacy switching machines and terminals of PSTN/ISDN. They need to operate both mobile and fixed services, therefore, proposing a core network system that supports both fixed access and mobile access will reduce not only the investment and construction costs for the full-service operators but also other operation costs as well, and furthermore, it will provide more competitive services on the basis of integrated service network.

For the integration trend of the network, lots of standard organizations, operators and equipment manufacturers are actively making research on IMS-based network integration solutions to provide fixed access method.

### Summary of the Invention

The technology problem that needs to be solved in the present invention is to provide an apparatus for realizing the access of a legacy terminal to an IMS system and the method thereof. In the IMS system architecture, based on providing service functions such as PSTN/ISDN simulation for NGN terminals by IMS system, the invention realizes the integration of fixed and mobile networks within the core network.

The present invention provides an apparatus for realizing the access of a legacy terminal to an IMS system, wherein said IMS system has CSCF function entity and obtains terminal user information from HSS, comprising:
a session control module, which is used to provide signaling interworking between signaling from terminal and SIP signaling, as well as the control of terminal registration and session;
a downlink signaling interface function module, which is used to provide signaling interaction with legacy terminals; under the control of said session control module, the downlink signaling interface function module provides legacy switch function for legacy terminals;
a downlink bearer interface function module, which is used to provide media channel to legacy terminals;
an uplink signaling interface function module, which is used to provide SIP signaling interaction with CSCF function entity of IMS core network; under the control of said session control module, the uplink signaling interface function module provides SIP UA function for legacy terminals;
an uplink bearer interface function module, which is used to provide media channel to IMS bearer network;
a media interworking module, which is used to provide the connection and media adaptation between uplink bearer interface function module and downlink bearer interface function module under the control of said session control module.

The present invention further provides a method for realizing the access of a legacy terminal to an IMS system, wherein said IMS system has CSCF function entity and can obtain terminal user service profile from HSS, comprising the following steps:
Said session control module detects whether said legacy terminal has entered service status through said downlink signaling interface function module, and registers the terminals that have entered service status to the I-CSCF on IMS side through said uplink signaling interface function module;
During the session, the S-CSCF on IMS side obtains the service profile of legacy terminal users based on the interaction with said HSS. Under the control of said session control module, the uplink signaling interface function module provides SIP signaling interaction with the CSCF function entity of IMS core network, and the downlink signaling interface function module provides the signaling interaction with the legacy terminals;
Under the control of said session control module, the media interworking module provides the connection and media adaptation between the uplink bearer interface function module and the downlink bearer interface function module, controls the uplink bearer interface function module to provide the media channel to IMS bearer network and controls the downlink bearer interface function module to provide the media channel to the legacy terminals.

The present invention provides PSTN/ISDN simulation service capability for NGN terminals by way of IMS system. By using an accessing apparatus, the legacy terminals of PSTN and ISDN and the like access IMS network, thus the services of legacy networks such as PSTN/ISDN and the IMS network can integrate, reducing the cost of network construction and operation.

### Brief Description of Drawings

Figure 1 is a structural schematic diagram of the apparatus for realizing the access of a legacy terminal to an IMS system in the present invention;
Figure 2 is a flow chart of the method for realizing the access of the legacy terminal to an IMS system in the present invention;
Figure 3 is a schematic diagram of the access of the legacy terminal to an IMS system according to the present invention;
Figure 4 is a flow chart of the registration of the legacy terminal in an IMS network according to the present invention;
Figure 5 is a flow chart of the calling of the ISDN terminal in an IMS network according to the present invention; and
Figure 6 is a flow chart of the calling of the PSTN terminal in an IMS network according to the present invention.

### Preferred Modes for Carrying Out the Invention

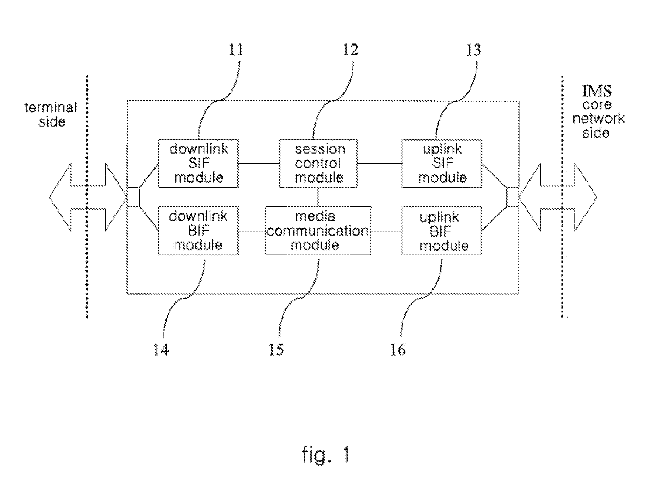

As is shown in Figure 1, it is the structural schematic representation of the apparatus for realizing the access of a legacy terminal to an IMS system in the present invention. We can call this apparatus as a function entity LTAF (Legacy Terminals Agent Function), which comprises: a downlink SIF (Signaling Interface Function) module 11, a session control module 12, an uplink SIF module 13, a downlink BIF (Bearer Interface Function) module 14, a media interworking module 15 and an uplink BIF module 16.

Among these, the session control module 12 is used to interwork between terminal signaling and SIP signaling and to control the terminal registration and session; the downlink SIF module 11 is used to provide signaling interaction with legacy terminal under the control of said session control module to provide legacy switch function for legacy terminals; the downlink BIF module 14 is used to provide media channel with legacy terminals; the uplink SIF module 13 is used to provide SIP signaling interaction with CSCF function entity of IMS core network, and under the control of said session control module, to provide SIP UA function for legacy terminals; the uplink BIF module 16 is used to provide media channel with IMS bearer network; the media interworking module 15 is used to provide the media channel and media adaptation (e.g. the voice encode/decode conversion) between uplink bearer interface function module and downlink bearer interface function module under the control of said session control module.

The function entity LTAF proposed in the present invention makes the legacy terminals access IMS core network, and with the aid of PSTN/ISDN simulation service function for NGN terminal provided by IMS system, thereby PSTN/ISDN service is provided for legacy terminals. From the view of I/S-CSCF function entity, the LTAF apparatus is a multi-user intelligent terminal apparatus with SIP UA (User Agent) function; from the view of the terminal, the LTAF apparatus is a legacy switch that can obtain the status of legacy terminals and complete signaling interaction function with legacy terminals.

In the present invention, LTAF apparatus also comprises the signaling communication interface with the terminals, the media interface with the terminals, the SIP signaling interface with I/S-CSCF function entity of IMS network and the media interface with the bearer network of IMS. Said apparatus provides SIP UA agent function for legacy terminals as well as the interworking function and session control function between legacy user protocols and SIP protocols.

Among these, SIP UA agent function means that LTAF for a legacy terminal works as an UA described in IETF RFC3261; the interworking function between legacy user protocols and SIP protocols means that after LTAF apparatus receives legacy signaling from the terminal side, it converts the legacy signaling into corresponding SIP signaling and sends it to CSCF function entity, while at the same time, it converts the SIP signaling received from I/S-CSCF function entity into the corresponding legacy user signaling and sends it to the terminals; the session control function means that LTAF apparatus controls the session of legacy terminal based on the legacy signaling that is received from the terminal side and the SIP signaling that is received from CSCF function entity, and completes the connection control and QoS control on session media.

For each legacy terminal, there is at least one corresponding terminal user in a LTAF apparatus.

Said LTAF apparatus in the present invention supports DTMF capability and also performs QoS (Quality of service) control for session, for instance, LTAF completes the QoS control function of the session by interacting with RACS subsystem of NGN system in ETSI TISPAN.

The signaling link between said LTAF apparatus and the terminals can employ Z interface, therefore it can provide the function of accessing IMS core network for PSTN terminals; it can also employ ISDN user interface, thus providing the function of accessing IMS core network for ISDN terminals; furthermore, it can employ V5 interface and provides the function of accessing IMS core network for access network; the media interface between LTAF apparatus and the bearer network of IMS core network can employ TDM interface as well as IP interface.

Said LTAF apparatus can be provided with the authentication information of accessing IMS core network for each terminal user; LTAF apparatus can be provided with the authentication information of accessing IMS core network.

Said LTAF apparatus owns a public id for each terminal user, for example, telephone numbers, and other users can use the public id to build communication with it; LTAF apparatus owns a private id for each terminal user and correspondingly, on HSS, there exists the corresponding relations for said private identity and the public identity.

When LTAF apparatus performs registration in place of the legacy terminals, it brings the private identity corresponding to the terminal to S-CSCF through registration information; S-CSCF obtains the public identity of terminal user corresponding to this terminal through the interaction with HSS, and finally returns the public identity in the response information of "registration succeeds" to LTAF apparatus, which saves the corresponding relationship of the private and public identities.

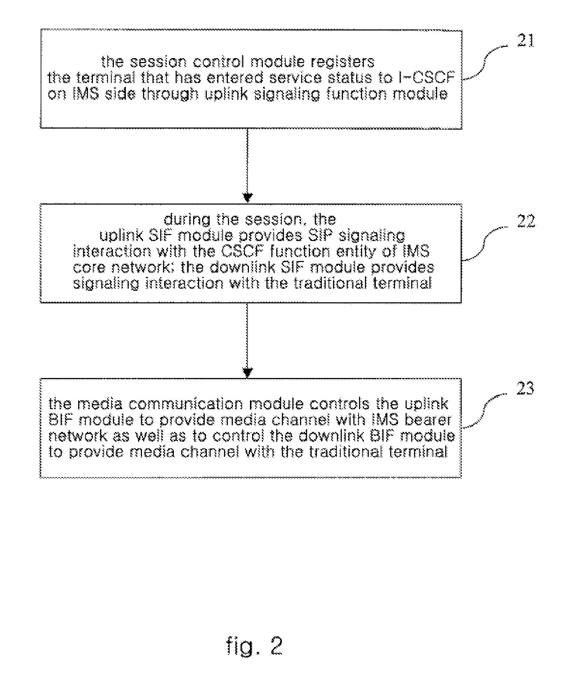

As is shown in figure 2, it is a flow chart of realizing the access of the legacy terminal to an IMS system in the present invention. First of all, the session control module detects whether said legacy terminal has entered the service status through said downlink signaling interface function module, and registers the terminal that has entered service status to I-CSCF on IMS side through said uplink signaling interface function module (step 21); then during the session, the S-CSCF on the IMS side obtains service profile of legacy terminal users based on the interaction with said HSS, under the control of said session control module, the uplink signaling interface function module provides SIP signaling interaction with the CSCF function entity of IMS core network, and the downlink signaling interface function module provides signaling interaction with the legacy terminals (step 22); under the control of said session control module, the media interworking module provides the connection and media adaptation between uplink bearer interface function module and downlink bearer interface function module and controls the uplink bearer interface function module to provide the media channel with IMS bearer network, and controls the downlink bearer interface function module to provide the media channel with the legacy terminal(step 23).

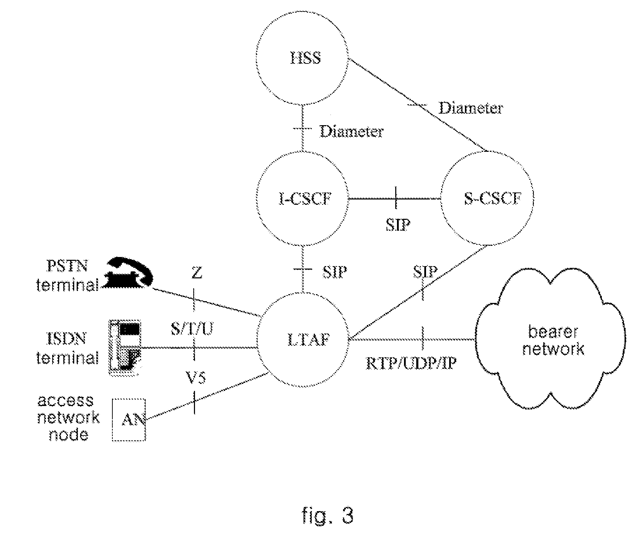

As is shown in figure 3, it shows the schematic diagram of the access of the legacy terminal to an IMS system according to the present invention. Wherein PSTN terminal connects to LTAF apparatus through Z interface, ISDN terminal connects to LTAF apparatus through ISDN BRI S/T interface or U interface, and for the terminal that connects to LTAF apparatus through access network, it employs V5 interface; LTAF apparatus interacts with I/S-CSCF through SIP protocol; the related service profile of legacy terminals is stored on HSS, and I/S-CSCF employs Diameter protocol to interact with HSS; LTAF apparatus and IMS bearer network employ RTP/UDP/IP interfaces. The terminal tag corresponding to the legacy terminal is identified by user number, and meanwhile the user information corresponding to this user number is stored on HSS.

The legacy terminal connects to LTAF through communication link, while LTAF connects to IMS core network and possesses communication link with IMS function entity such as I/S-CSCF etc; each legacy terminal has a private identity and a public identity for each terminal user on LTAF, as well as the corresponding authentication information; correspondingly, the corresponding relation of terminal user profile (including private identity, public identity, service profiles, authentication information and so on) is stored on the HSS; I/S-CSCF can obtain terminal user profile from HSS.

After LTAF apparatus has entered in working status, it detects whether the legacy terminal has entered in service status and then registers the terminal that has entered in service status to I/S-CSCF. I/S-CSCF takes it as a SIP UA terminal within a common IMS to perform registration flow. If the terminal succeeds in registration, LTAF apparatus sets a tag as "terminal registration success" and records S-CSCF information of its registration place, otherwise, it sets a tag as "terminal registration unsuccess".

During the session, S-CSCF performs the service control flow of SIP session between S-CSCF function entity and LTAF apparatus according to the user service profile of legacy terminals obtained from HSS. Meanwhile, LTAF apparatus provides the interworking function between legacy terminal protocol and SIP protocol, and completes the session control flow with legacy terminal on the terminal side.

In said access method of present invention, the service profile of legacy terminals stored in HSS is built on the basis of the legacy terminal service capability, i.e., the service profile can not go beyond the service capability scope of legacy terminals.

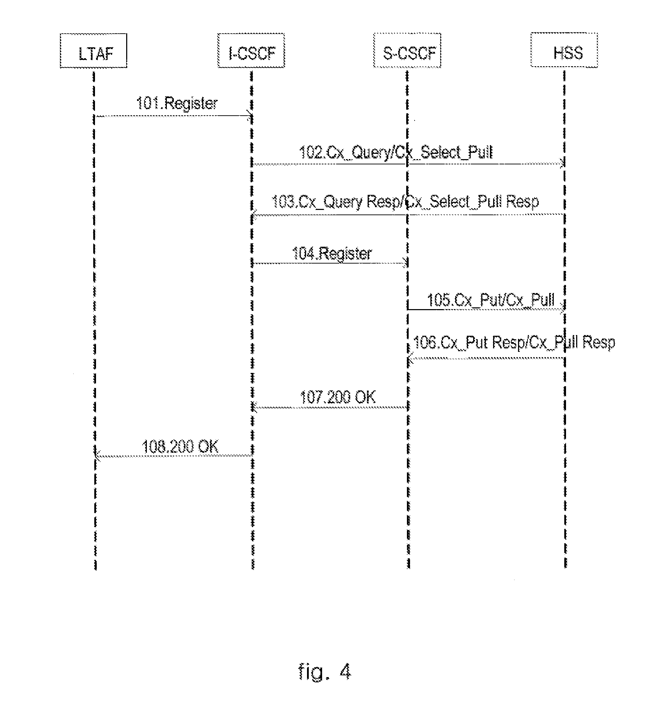

After LTAF apparatus enters in service status, the session control module performs the terminal registration. Before the registration flow starts, firstly, the session control module finds I-CSCF address through the preconfigured I-CSCF domain name. The detailed registration process is shown in figure 4:
101: the session control module detects whether the legacy terminal has entered in service status through downlink SIF module and converts the user number of corresponding legacy terminal that has entered service status into SIP-URI format according to RFC2806, it then initiates registration request to I-CSCF through uplink SIF module;
102: I-CSCF initiates legacy terminal user inquiry request to HSS based on the terminal registration request information;
103: HSS returns the domain name of S-CSCF to I-CSCF;
104: I-CSCF obtains the address of S-CSCF by the domain name of S-CSCF; it sends terminal registration request to S-CSCF;
105: S-CSCF performs terminal registration processing, and initiates updating request to HSS with the terminal registration information;
106: HSS saves terminal registration information and responds to S-CSCF;
107: S-CSCF performs the corresponding registration service control and sends SIP 200 OK message to I-CSCF;
108: I-CSCF sends SIP 200 OK message to LTAF.

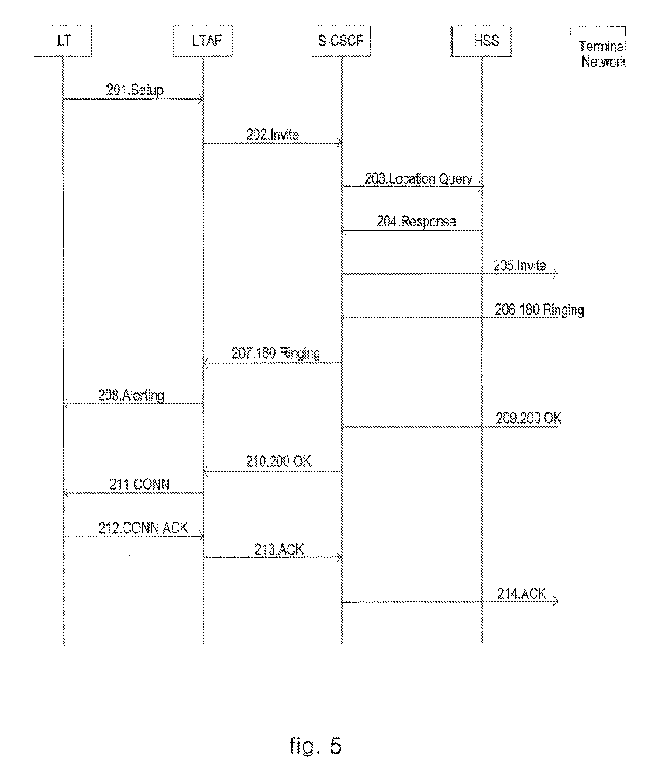

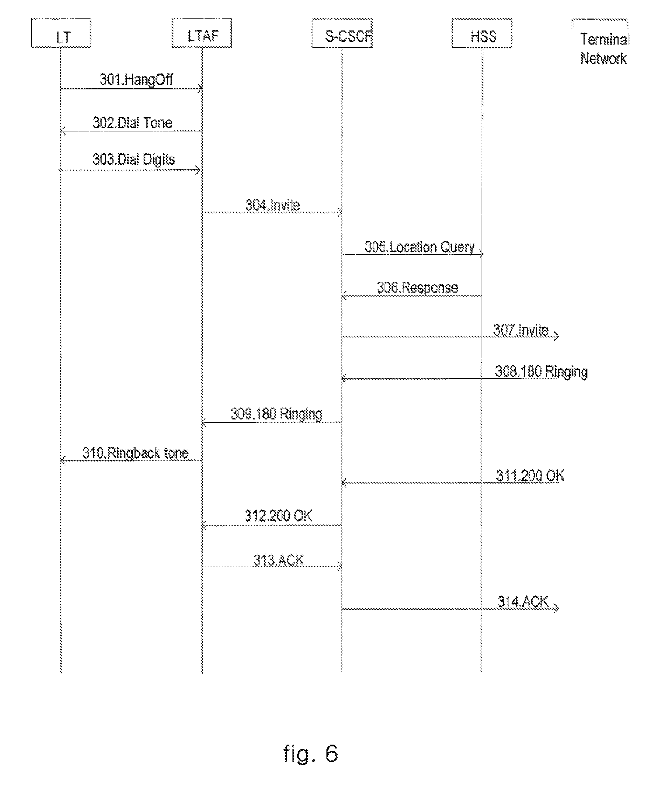

Once the legacy terminal succeeds in registration, LTAF can provide service function such as calling/called under the control of S-CSCF. The following embodiments respectively use PSTN terminal and ISDN terminal as the calling party to describe the calling flow, wherein, figure 5 describes the flow chart of ISDN terminal call; figure 6 describes the flow chart of PSTN terminal call.

The detailed flow in figure 5 is as follows:
201: ISDN terminal is off-hook and initiates the Setup calling request;
202: LTAF downlink SIF module receives Setup request and sends it to LTAF call control module for processing; LTAF call control module converts the request into SIP Invite request information, and the uplink SIF module sends it to S-CSCF;
203: according to the received Invite request, S-CSCF sends Location Query to HSS, inquiring for the location of the called party;
204: HSS returns the location information of the called party to S-CSCF;
205: S-CSCF sends SIP Invite request information to the called party;
206: the called party responds to S-CSCF with SIP 180 Ringing message;
207: S-CSCF sends SIP 180 Ringing message to LTAF;
208: after receiving the information, LTAF uplink SIF module informs LTAF session control module; LTAF session control module processes the information correspondingly and initiates QoS request to the bearer network, furthermore, after the QoS request succeeds, the session control module informs LTAF media interworking module to build uplink bearer channel; LTAF media interworking module controls the uplink BIF module to build uplink bearer channel; LTAF session control module sends Altering information to the terminals through the downlink SIF module;
209: after the called party is off-hook, the called party sends SIP 200 OK information to S-CSCF;
210: S-CSCF sends SIP 200 OK information to LTAF;
211: after receiving the information, LTAF uplink SIF module informs LTAF session control module; LTAF session control module processes the information correspondingly and informs LTAF media interworking module to build a downlink bearer channel; LTAF media interworking module controls the downlink BIF module to build the downlink bearer channel; LTAF session control module sends CONN continuity information to the terminals through the downlink SIF module;
212: the terminal checks downlink bearer channel and if it is normal, the terminal responds to LTAF with CONN ACK;
213: after receiving the information, LTAF downlink SIF module informs LTAF session control module; LTAF session control module processes the information correspondingly and informs LTAF media interworking module to connect the uplink bearer channel and downlink bearer channel, furthermore, through uplink SIF module, it sends SIP ACK to S-CSCF to confirm the request information;
214: S_CSCF sends SIP ACK information to the called party and the session is established.

The flow in figure 6 is described in detail as follows:
301: PSTN terminal is off-hook; the downlink bearer channel between LTAF and PSTN is set up;
302: LTAF downlink SIF module detects this action and sends Dial tone to the terminal;
303: PSTN terminal dials;
304: LTAF downlink SIF module detects the dialed number and informs LTAF call control module; LTAF call control module converts the terminal dialing action into SIP Invite request information, which is sent to S-CSCF by the uplink SIF module;
305: based on the received Invite request, S-CSCF sends Location Query request to HSS, inquiring for the location of the called party;
306: HSS returns the location information of the called party to S-CSCF;
307: S-CSCF sends SIP Invite request information to the called party;
308: the called party responds to S-CSCF with SIP 180 Ringing information;
309: S-CSCF sends SIP 180 Ringing information to LTAF;
310: after receiving the information, LTAF uplink SIF module informs LTAF session control module; LTAF session control module processes the information correspondingly and initiates QoS request to the bearer network, and after the QoS request succeeds, the session control module informs LTAF media interworking module to build an uplink bearer channel; LTAF media interworking module controls the uplink BIF module to build the uplink bearer channel; LTAF session control module sends Ringback tone to the terminals through the downlink SIF module;
311: after the called party is off-hook, the called party sends SIP 200 OK information to S-CSCF;
312: S-CSCF sends SIP 200 OK information to LTAF;
313: after receiving the information, LTAF uplink SIF module informs LTAF session control module; LTAF session control module processes the information correspondingly and informs LTAF media interworking module to connect the uplink bearer channel and the downlink bearer channel; through the uplink SIF module, it sends SIP ACK to S-CSCF for confirming the request information;
314: S_CSCF sends SIP ACK information to the called party and the session is established.

In the above embodiments, it only describes the calling flow of PSTN and ISDN terminal calling parties, wherein the related call signaling and calling flow description are just indicative and are not intended to limit the present invention; any realizations similar to said calling flow should be included in the present invention.

### Industrial Applicability

Based on that IMS system provides PSTN/ISDN Simulation service function for NGN terminals, the invention offers the function entity and method for a legacy terminal accessing an IMS, realizing the service integration of fixed network and mobile network in a core network and reducing the cost of network construction and operation.

## Claims

1. An apparatus for realizing an access of a legacy terminal to an IMS system, wherein said IMS system has CSCF function entity and can obtain terminal user information by visiting HSS, wherein, **characterized in** comprising:
a session control module, which is used to provide signaling interworking between terminal signaling and SIP signaling as well as control on terminal registration and session;
a downlink signaling interface function module, which is used to provide signaling interaction with legacy terminal, and to provide legacy switch function for legacy terminal under the control of said session control module;
a downlink bearer interface function module, which is used to provide a media channel with the legacy terminal;
an uplink signaling interface function module, which is used to provide SIP signaling interaction with CSCF function entity of an IMS core network, and to provide SIP UA function for legacy terminal under the control of said session control module;
an uplink bearer interface function module, which is used to provide a media channel with an IMS carrier network;
a media interworking module, which is used to provide connection and media adaptation between the uplink bearer interface function module and the downlink bearer interface function module under the control of said session control module.

2. Said apparatus in claim 1, wherein it also comprises a signaling communication interface with said terminal, a media interface with the terminal, a SIP signaling interface with I/S-CSCF function entity of the IMS core network, and a media interface with a bearer network of the IMS core network.

3. Said apparatus in claim 1, wherein it stores a private identity, a public identity and corresponding authentication information of said terminal, and correspondingly it stores corresponding relationship of terminal user information on said HSS.

4. Said apparatus in claim 2, wherein said terminal covers a PSTN terminal and the signaling communication interface with said terminal is Z interface.

5. Said apparatus in claim 2, wherein said terminal covers an ISDN terminal and the signaling communication interface with said terminal is ISDN user interface.

6. Said apparatus in claim 2, wherein said terminal covers a terminal accessing through an accessing network and the signaling communication interface with said terminal is V5 interface.

7. Said apparatus in claim 2, wherein TDM interface is adopted as said media interface with the bearer network of the IMS core network.

8. Said apparatus in claim 2, wherein IP interface is adopted as said media interface with the bearer network of the IMS core network.

9. A method for realizing an access of a legacy terminal to an IMS system by using the apparatus in claim 1, wherein said IMS system has CSCF function entity and can obtain user profile from HSS, **characterized in** comprises following steps:
said session control module detects whether said legacy terminal has entered service status through said downlink signaling interface function module, and registers the terminal that has entered service status to I-CSCF on IMS side through said uplink signaling interface function module;
during the session, the S-CSCF on the IMS side obtains the service profile of legacy terminal users based on the interaction with said HSS, and under the control of said session control module, the uplink signaling interface function module provides SIP signaling interaction with the CSCF function entity of the IMS core network, the downlink signaling interface function module provides signaling interaction with the legacy terminal;
under the control of said session control module, the media interworking module provides connection and media adaptation between uplink bearer interface function module and downlink bearer interface function module, controls the uplink bearer interface function module to provide the media channel with the IMS network and controls the downlink bearer interface function module to provide the media channel with the legacy terminal.

10. Said method in claim 9, wherein said registration process comprises following steps:
said session control module converts a user number corresponding to the legacy terminal that has entered service status into SIP-URI format according to RFC2806, then initiates registration request to I-CSCF through the uplink signaling interface function module;
I-CSCF initiates a legacy terminal user inquiry request to HSS based on terminal registration request information;
HSS returns S-CSCF domain name to I-CSCF;
I-CSCF obtains the address of S-CSCF by the domain name analysis of S-CSCF; it sends terminal registration request to S-CSCF; it sends terminal registration request to S-CSCF;
S-CSCF performs terminal registration processing, and initiates an updating request to HSS with the terminal registration information;
HSS saves terminal registration information and responds to S-CSCF;
S-CSCF performs corresponding registration service control and sends SIP 200 OK message to I-CSCF;
I-CSCF sends SIP 200 OK message to the uplink signaling interface function module.

11. The method in claim 9, wherein during the registration process of said terminal, if the terminal succeeds in registration, the tag is set with "terminal registration success" and records S-CSCF information of its registration place, otherwise, the tag is set with "terminal registration unsuccess".
